Europäisches Patentamt

**European Patent Office**

**Office européen des brevets**

(11) Publication number: **0 130 712**
A2

# EUROPEAN PATENT APPLICATION

(21) Application number: **84303920.7**

(22) Date of filing: **11.06.84**

(51) Int. Cl.⁴: **B 62 M 3/08**

(30) Priority: **01.07.83 US 510426**
**30.05.84 US 615268**

(43) Date of publication of application: **09.01.85**
**Bulletin 85/2**

(84) Designated Contracting States: **AT BE CH DE FR GB IT LI LU NL SE**

(71) Applicant: **Trindle, James J., 35395 Beach Road, Capistrano Beach California 92624 (US)**

(72) Inventor: **Trindle, James J., 35395 Beach Road, Capistrano Beach California 92624 (US)**

(74) Representative: **Rushton, Ronald et al, SOMMERVILLE & RUSHTON 11 Holywell Hill, St. Albans Hertfordshire AL1 1EZ (GB)**

(54) **Bicycle pedal and shoe.**

(57) To enable a cyclist to provide 360° of driving force on each bicycle pedal, the cyclist's shoe (10) is formed with a pair of lugs (16, 17) that mate with receivers (28, 30, 100, 102) formed on a bicycle pedal (20, 28). The pedal may incorporate a counterweight (56) or be constructed to have a center of gravity below its axis (87) of rotation, thereby insuring that the pedal is normally disposed with the mating surface facing upwardly. The shoe is connected and disconnected to the pedal by a simple edgewise movement, with the connection being arranged to maintain the shoe in driving relation with the pedal when pedaling force is applied, yet easily disengagable. In an alternative construction, the male connecting lugs (62, 64) are formed on the pedal while the female receivers (72, 74) are formed on the shoe.

# BICYCLE PEDAL AND SHOE

## Background of the Invention

This invention relates to an improved arrangement for connecting a bicycle shoe to a bicycle pedal.

When pedaling a bicycle in the normal manner with the rider's shoes not attached to the pedals, the pedaling force to rotate the bicycle drive wheel is only provided during about half the 360° movement of each pedal. That is, first one pedal is providing the basically downward thrust to rotate the pedal sprocket while the other pedal is moving upwardly, and then the situation is reversed as the other pedal is moved downwardly. Thus, the upward movement of the cyclist's foot contributes nothing to the driving force to move the bicycle. The exclusive use of downward forces, applied to the opposite pedals on an alternating basis is satisfactory for much bicycling activity. However, it is well known that it is much easier and more efficient to propel a bicycle if each pedal is providing moving force throughout the 360° movement for each of the pedals.

Currently, bicycle racers and other bicycle enthusiasts utilize special racing shoes that attach to the pedals to enable this 360° force to be provided. The most common approach for accomplishing this is to utilize a toe clip and strap, preventing the shoe from being vertically lifted off of the pedal, and a groove block attached to the sole which prevents the shoe from sliding aft and out of the toe clip and strap. These shoes are frequently used for touring and racing long distances on motor highways.

A major disadvantage of this system is that the cyclist is released from the bicycle only by unbuckling the strap by hand. This is very inconvenient and awkward for routine stops such as at a traffic light. Consequently many cyclists attempt to keep moving slightly to avoid this, which is bothersome and many times dangerous. In case of a fall, collision with a motor vehicle, or other emergency, there is insufficient time for the cyclist to unbuckle his feet, with the result that the danger is greater and the cyclist remains strapped to the bicycle. This is why many cyclists wryly refer to their footwear as "suicide shoes".

A variety of other systems are known for connecting specially constructed bicycle shoes to specially constructed pedals to obtain the desired driving force during the 360° movement of each pedal. While some of these systems purport to provide more convenient connection and disconnection, they also typically include some additional means for maintaining the connection in a manner that requires the user's hands or requires some special movement of the user's feet which make connection-disconnection difficult. In practice, those alternative systems do not appear to be popularly utilized and the toe clip and strap approach referred to above remains in common use by racers and cycle enthusiasts.

Accordingly, a need exists for a shoe and pedal combination that improves the connection and disconnection system so that the connection is reliable during pedaling but is capable of instant disengagement without the use of hands. In addition, a combination meeting this requirement should preferably employ a shoe that is reasonably good for walking such that the cyclist does not have to carry an extra pair of walking shoes to be utilized when not riding the bicycle. This factor is quite significant for cyclists that tour considerable distances. For example, it is commonplace for many cyclists to ride 80 or 100 miles in a day, or more. They buy expensive light weight, high performance bicycles that minimize the work required in pedaling the bike. Thus, any weight saving that can be realized provides a significant advantage to the cyclist.

It is also important that the shoe and pedal combination be simple in design so as to be easy to utilize and to be reliable. Related to this, the construction must be rugged and durable to withstand the considerable stress to which the components are subjected over an extended period of time.

## Summary of the Invention

The present invention provides an improved bicycle pedal and shoe combination which satisfies the desired requirements. Briefly stated, the shoe is coupled to the pedal to provide the desired 360° pedal driving action in a manner such that the pedaling action produces forces to keep the shoe and pedal locked together; but when pedaling is interrupted, the shoe may be disconnected from the pedal by simply moving the shoe a short distance in a natural manner. The connecting arrangement is preferably slightly angled such that the normal pedaling action produces a lateral force component that tends to maintain the shoe in its proper pedaling position. However, this retaining force stops when the pedaling action is stopped, such that the shoe may be readily disconnected from the pedal by simply moving the foot edgewise.

To maintain proper orientation of the pedal for easy mating to the shoe, the pedal may be provided with a counterweight or constructed to have a center of gravity below the pedal's axis of rotation. This underslung construction insures that the pedal mating surface remains upwardly disposed when not connected to a shoe, thereby facilitating engagement of the shoe to the pedal.

In a preferred arrangement, a pair of lugs are formed on the sole of a shoe, and a pair of channel-like receivers are formed on the underslung pedal in position to receive the lugs upon lateral movement of the shoe. The shoe lugs are angled to define a slight convex curvature and the pedal receivers are mounted to provide a mating concave curvature with the result that the normal pedaling action produces a pair of lateral force components which cause the shoe to remain centered on the pedal. In an alternative arrangement, the pair of lugs is formed on the pedal and the receivers are formed on the shoe sole plate.

Detailed Description of the Preferred Embodiments

Figure 1 is a perspective view of the pedal and shoe combination of the invention with the shoe separated from the pedal.

Figure 2 is a perspective view of the connecting lug plate which is imedded in the sole of the shoe in Figure 1.

Figure 3 illustrates the lug receiver unit by itself which is mounted on the pedal of Figure 1.

Figure 4 is a side elevation view of the pedal with the shoe being shown in cross section while coupled to the pedal, the connecting and disconnecting movement of the shoe being illustrated by phantom lines.

Figure 5 is a cross sectional view on line 5-5 of Figure 4.

Figure 6 is a cross sectional view on line 6-6 of Figure 4 illustrating the shoe and pedal connecting means.

Figures 7, 8 and 9 disclose a second embodiment of the invention wherein the connector portions are reversed from that of Figure 1, such that the male lugs are mounted on the pedal and the female connectors are mounted on the shoe plate.

Figure 10 is a perspective view of an alternative pedal construction wherein the pedal is underslung.

Figure 11 is a perspective view of an alternative construction of an underslung pedal.

Figure 12 is a perspective view of another alternative embodiment of an underslung pedal.

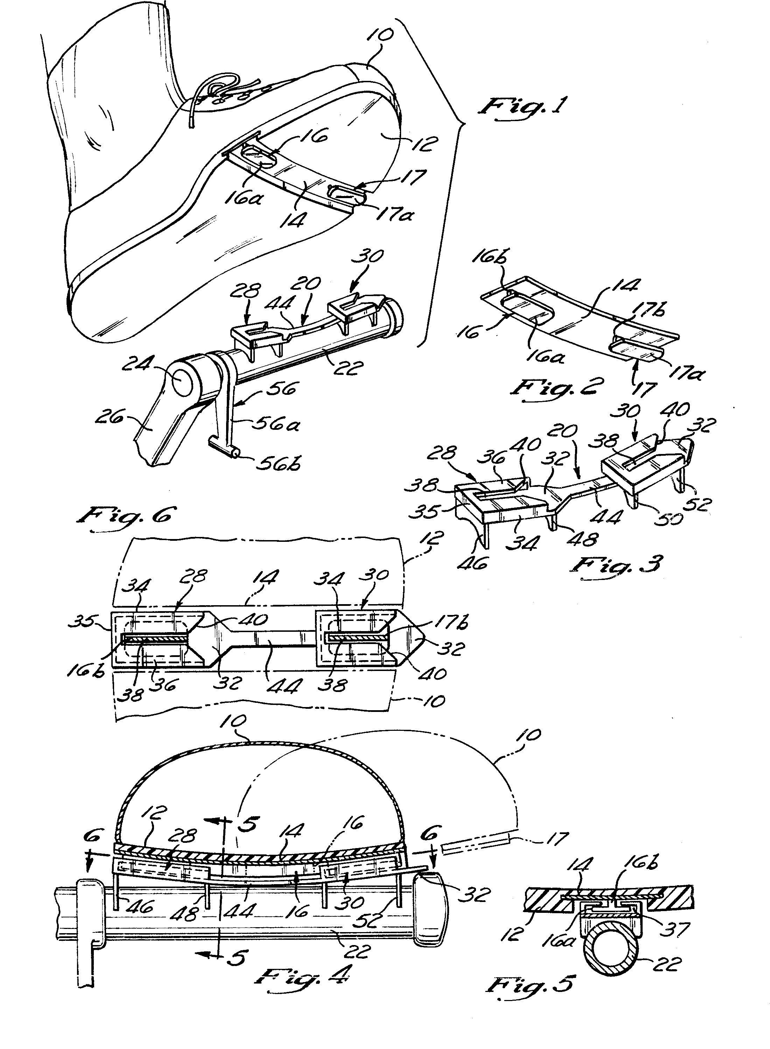

Referring to Figure 1, there is shown a shoe 10 having a sole 12 with a plate 14 extending transversely across the shoe sole in the area of the ball of a person's foot. The plate 14 is imbedded in a slot in the sole and secured to the sole in some suitable manner, such as with portions of the sole that overlapping the edges of the plate. Secured to the plate 14 is a pair of male connectors such as lugs 16 and 17 which function as pedal engaging members. Lugs 16 and 17 are laterally spaced from each other, with one lug being positioned on one end of the plate adjacent one edge of the shoe sole and the other lug being positioned on the other end of the plate adjacent the other edge of the shoe sole. It is understood that where the sole 12 of the shoe 10 is formed of sufficiently rigid material, e.g. sufficiently hard plastic, lugs 16 and 17 may be directly connected to the sole, without the need for a reinforcing plate, such as plate 14.

The lugs preferably include generally horizontal portions 16a and 17a and vertical portions 16b and 17b that connect the horizontal portion to the plate 14. This gives the lugs an inverted, generally T-shaped cross section with the horizontal portions 16a and 17a spaced from and generally parallel to the plate 14. Alternative embodiments portions 16a and 17a may be circular or of any other shape adapted to conveniently engage the connecting apparatus on the pedal. The length of vertical portions 16b and 17b may similarly be selected in accordance with the particular application. In order to facilitate ease of walking, the dimensions of 16, 16a, 16b, 17, 17a and 17b may be selected such that little or no portion of the lugs extends below the lower portion of sole 12.

For cooperating with the male connector lugs, there is provided a female connector unit 20 mounted on a pedal sleeve 22, which is rotationally mounted in conventional fashion on a pedal shaft 24 extending horizontally from a conventional pedal crank 26. The connector unit 20 includes a pair of channel-like lug receivers 28 and 30. Each of the receivers includes a bottom wall 32 and short upstanding side walls 34 and an end wall 35 supporting a top wall 36, which together define a space 37 for receiving one of the connector lugs on the shoe. The ende of each receiver facing towards the outer lateral end of the pedal sleeve 22 is open to receive a connecting lug. Centrally located in the upper wall 36 of each of the receivers is a laterally extending slot 38 which opens into a V-shaped guide portion 40 which, in turn, is open to the outer lateral end of the receiver.

As may be seen, the receiver elements 28 and 30 are laterally aligned and spaced. This is conveniently accomplished by having the bottom wall 32 of the receivers 28 and 30 conveniently interconnected by a bridge 44. The receivers need not be connected to each other at all since they are both mounted on the pedal sleeve 22, but it is convenient to have them joined for maintaining proper alignment and spacing. Further, the bottom walls could be formed as a single plate similar to the plate 14, but it is desirable to reduce the amount of material in the area of the bridge 44 simply for the purpose of minimizing weight. Also, the portions of the bottom wall forming the entryway to the receivers 28 and 30 have somewhat pointed, tapered configurations designed to provide adequate guiding surface for the lugs 16 and 17 but at the same time minimizing the weight involved.

The receiver 28 is attached to the sleeve 22 by means of a pair of spaced supports 46 and 48, and the receiver 30 is similarly supported by supports 50 and 52. The upper edges of these supports are flat to conform to the bottom wall 32 of the receivers while the lower edges are curved to conform to the exterior of the sleeve 22. These lower edges are welded or otherwise suitably secured to the sleeve.

In accordance with the invention, the legs 46 and 52, which are closest to the ends of the sleeve 22, are taller than the inner legs 48 and 50, as may be most easily seen in Figure 4. This causes the bottom walls of the receiver to be angularly oriented with respect to the sleeve 22. Further, the combination of the angle of the two receivers, essentially defines a slight curve, that is, a curve around a large radius, as may be seen in Figure 4. In that view, the pedal sleeve 22 is horizontally oriented while the receivers define a concave upwardly facing curve, with the lowest point of the curve being in the bridge 44 between the two receivers. It may also be seen from Figure 4 that the plate 14 forms a convex curve similar to that formed by the receivers with the result that the lug portions 16a and 17b essentially define a similar convex curve that mates with the receiver curve.

From the foregoing, it is can be seen that when the shoe 10 is to be connected to the pedal, it is placed as shown in broken lines in Figure 4 with the lug 16 being positioned between the two receivers and aligned with the entry to the receiver 28 while the lug 17 is positioned laterally outwardly from but aligned with the receiver 30. The shoe is then moved edgewise to the solid line position shown in Figures 4 and 6 wherein the lug portion 16a is confined within the receiver 28 while its support portion 16b extends through the slot 38 in the receiver 28, while the lug 17 similarly cooperates with the receiver 30. The guide portions 40 help guide the lugs into the receivers. The end wall 35 of each receiver limits the lateral movement of the shoe, although it is not critical in that the cyclist's foot movement is limited in that direction anyway by the bicycle frame.

In this connected position, the cyclist can produce the desired 360° of pedal action.

If the user wants to disconnect his shoe from the pedal, it is of course only necessary to reverse the action by moving his foot edgewise outwardly to the broken line position shown in Figure 4 and then lifting his foot. This action can be readily and quickly performed, which is of great significance from a standpoint of convenience and safety so that the user can stop the bike and easily place his feet on the ground or street, and can also separate from the bike easily in the event of an emergency.

While the precise movement of the user's foot and shoe in disconnecting the shoe from the pedal is movement on a wide arc followed by lifting, the general movement is edgewise or lateral outwardly. Conversely, in connecting the shoe to the pedal, the foot is moved essentially edgewise inwardly after the lugs have been aligned with the open ends of the receivers.

The significance of having the receivers angled or oriented on a wide, concave curve and the lugs angeled or oriented on a mating convex curve is that the users normal pedaling action will produce forces tending to keep the shoe properly centered and in driving relation with the pedal. That is, a downward force on the pedal produces primarily a vertical downward load, but in addition, the lug 17a in reacting against the receiver 30 produces a generally edgewise force component towards the lengthwise centerline of the shoe, while the lug 16a cooperating with the receiver 28 produces an edgewise force component on the shoe in the opposite direction, towards the lengthwise centerline of the shoe.

Similarly, when the cyclist's foot and shoe are providing a lifting force on the pedal, there are counterbalancing outward edgewise forces exerted on the pedal and the shoe which tend to maintain the shoe centered in the driving position. This is in contrast to a conventional flat, horizontal arrangement, wherein a shoe could inadvertently slip edgewise and become uncoupled from the pedal. Of course, by ceasing to apply torque to the pedals, the shoe may be instantly disengaged by the slight sideways or lateral movement.

Another advantage of the arrangement illustrated is that the lugs 16 and 17 on the shoe are relatively inobstrusive, being approximately flush with the bottom of the shoe sole. Consequently, the cyclist can walk with relative ease with these shoes, thus not having to hop or hobble and avoiding the necessity to carry an extra pair of shoes to be used when not on the cycle.

From the foregoing it will be noted that it is necessary that the receivers 28 and 30 be facing upwardly as shown in Figures 1 and 4, when the shoe is to be connected to the pedal. To make sure that the pedal, when free, will always take this orientation, there is provided a counterweight 56 attached to the inner end of the spool 22. The counterweight has a relatively long moment arm 56a such that only a relatively small weight 56b is required to provide sufficient torque to cause the sleeve to always rotate to the position wherein the weight 56b is hanging downwardly, while the receivers 28 and 30 are always facing upwardly.

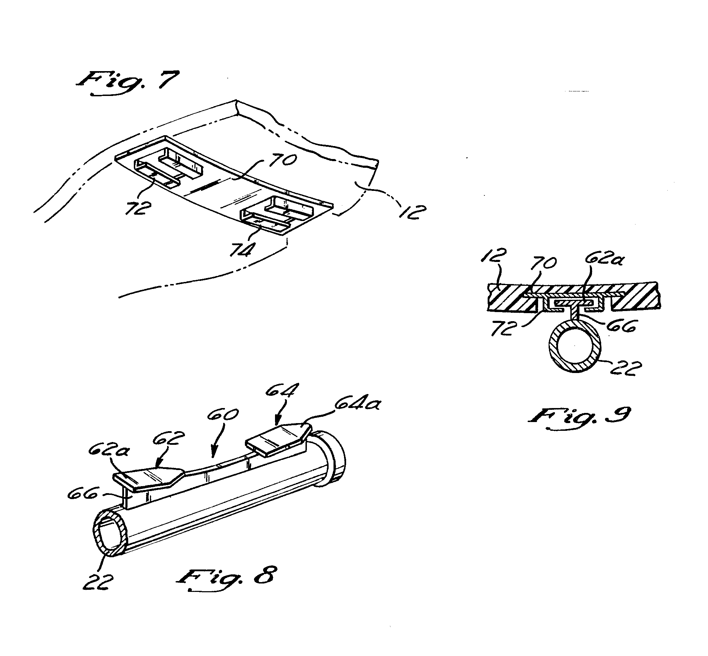

Figures 7, 8 and 9 illustrate an alternative arrangement which is essentially the reverse of that shown in Figures 1-6. That is, the support plate 70 that is imbedded in the sole 12 of the shoe is provided with a pair of channel-shaped receivers 72 and 74, as shown in Figure 7, while the sleeve 22 on the pedal is provided with a pair of lugs 62 and 64. These lugs include generally horizontal portions 62a and 64a that fit within the channel-shaped receivers 72 and 74 with the support legs 66 supporting the lug portion 62a and 64a extending through the slots in the receivers. The channels 72 and 74 are not provided with end walls, to illustrate that they are not mandatory. The sole plate 70 and the lug portions 62a and 64b are oriented to form the mating convex and concave curves referred to above so that the shoe will tend to remain centered in the driving position with the pedal during normal pedaling action. The connecting and disconnecting movement is, of course, the same for the arrangement of Figures 7, 8 and 9 as it is for the embodiment of Figures 1-6.

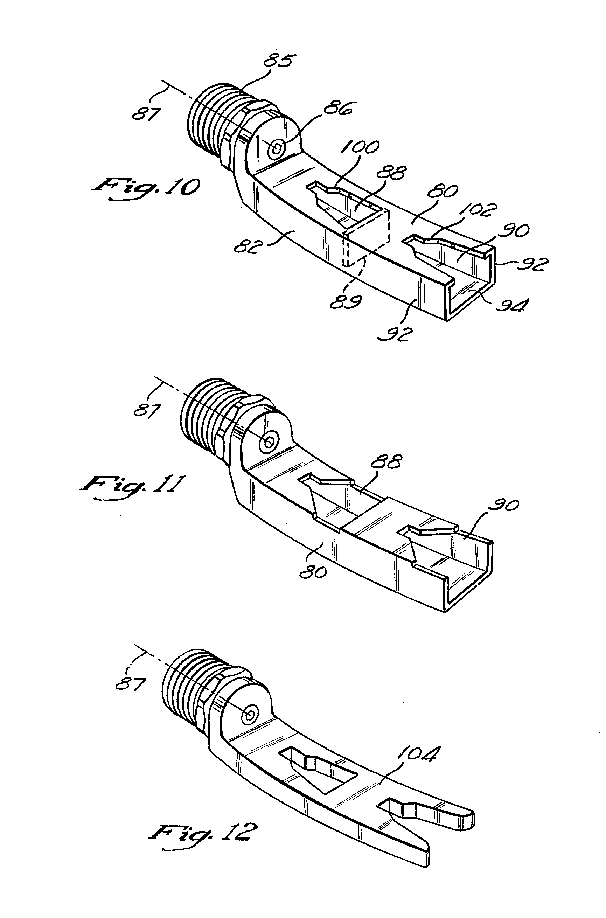

In the embodiment illustrated of Figure 10, pedal 82 is constructed to have a center of gravity offset from the axis of rotation of the pedal as it engages the pedal crank via a bearing assembly 85 and a fastener 86. This underslung pedal construction eliminates the need for a separate counterweight, causes the mass of pedal 82 to fall to a position below the axis of rotation 87 through the bearing assembly, with the shoe engaging portion of the pedal facing upwardly. Thus, no matter what angle the bicycle pedal crank forms with respect to the horizontal, pedals 82 will always gravitate to a position for receiving and engaging the connecting member on shoe 10. This construction facilitates connection between the shoe 10 and pedal 82, and eliminates the need to visually check the orientation of the pedal without the requirement for a counterweight as shown at Figure 1. As with the construction illustrated at Figure 1, the cyclist need not spin the pedal with his foot to properly orient the pedal for engagement to the shoe. Further, the upper surface of the pedal, engaged by the cyclist's shoe, is slightly below the pedal rotational axis 87. Thus, if the cyclist's shoe should happen to engage the pedal with a somewhat rotational but downward force, the pedal does not tend to spin since the pedal upper surface is already in its lowermost position. That is, if the upper surface of the pedal were above the axis 87 and a downward but somewhat rotational force were applied, there would be some tendency for the pedal to spin, thus making connection of the shoe to the pedal difficult.

The pedal 82 includes an upper plate-like member 80 having a female connector which functions as a shoe engaging member. Located in the upper member 80 is a pair of spaced, laterally extending and laterally aligned slots 88 and 90 which open into guide portions 100 and 102. Guide portion 102 is open to the outer lateral end of the pedal 82. Pedal 82 also includes a bottom, plate-like wall or member 94 and front and rear side walls or members 92 supporting the upper member 80. Together, the upper member 80, the side members 92, and bottom member 84 define a box-like structure having an interior space for receiving the connector lugs on the shoe, via the slots 88 and 90. The end of pedal 82 is open to receive a connecting lug into slot 90 and guide portion 102.

The total weight of the pedal 82 is expected to be approximately 110 grams, depending upon the particular materials employed. That weight compares highly favorably with the weight of a typical pedal including a toe clip and strap which is estimated to be approximately 220 grams. Suitable materials for use in construction of the invention include aluminum and steel, though numerous other materials may also be employed.

In order to facilitate disengagement of lug 16 from slot 88, an inner wall 89 may be provided extending from the outside edge of slot 88 through the thickness of pedal 82, to bottom member 92. Inner wall 89 functions to prevent lug 16 from being moved beyond the inside edge of slot 88 where it may catch against a portion of upper member 80 and thereby impede disengagement of lug 16 from slot 88.

In order to further facilitate engagement and disengagement of the connecting member, slots 88 and 90 may be as wide as upper member 80, as shown at Figure 11. That construction minimizes any problems restricting rapid disengagement due to lugs 16 and 17 catching on any portion of upper member 80 adjacent slots 88 and 90. This

0130712

same advantageous feature can be obtained without the necessity for a box-type construction by eliminating the bottom member 94 to form a channel, or by curving the front and rear edges of member 80 to provide some side dimension which will provide structural support, without producing an edge that may catch against lugs 16 and 17.

For the purpose of minimizing weight, walls 92 and 94 can be perforated or even wholly eliminated to form pedal 82 from a single rigid plate similar to upper member 80. In Figure 12 the pedal essentially is reduced to upper member 104. Where side walls and a bottom wall are eliminated, upper member 104 must be formed of sufficiently strong materials, to withstand the pressure applied by the cyclist without bending, and without breaking off at the connecting point to the pedal crank.

As with the arrangements of Figures 1-9, the arrangements of Figures 10-12 are curved, concave as shown, so that a normal pedalling action produces slight edgewise force components that tend to center the shoe on the pedal.

WHAT IS CLAIMED IS:

1. The combination of a bicycle pedal (82) and a shoe (10) comprising a bicycle pedal (82) rotatably connected to a pedal crank (26) and extending generally horizontally therefrom, said pedal including a shoe engaging member upwardly (80, 100, 102) facing when the pedal is normally disposed, the upper surface of said shoe engaging member being substantially below the pedal axis (87) of rotation when the pedal is normally disposed, a shoe (10) having a pedal engaging member (16) secured to and extending downwardly from said shoe, said pedal engaging member being designed to move laterally into engagement with the shoe engaging member on the pedal in a manner to enable rotational force to be applied through said shoe to said pedal through 360° of pedaling rotation.

2. The combination as recited in Claim 1 wherein said shoe engaging member comprises a rigid plate (80, 104) having at least one slot adapted to receive said pedal engaging member.

3. The combination as recited in Claim 1, wherein said pedal (82) forms a box-like, hollow structure including said shoe engaging member (80), front and rear side walls (92) and a bottom wall (94).

4. The combination as recited in Claim 3, wherein said shoe engaging member includes at least one slot (88) adapted to receive said pedal engaging member.

5. The combination as recited in Claim 4, wherein said slot (88a) extends substantially the distance between said side walls.

6. The combination as recited in Claim 1, wherein said pedal (82) forms a four-sided structure, said structure including said shoe engaging member (80), front and rear side walls (92) and a bottom wall (94), said pedal engaging member including at least one lug (16) extending vertically therefrom and adapted to engage said shoe engaging member (80).

7. The combination as recited in Claim 1, wherein said pedal engaging member comprises at least one lug (16) extending from said shoe and adapted to engage said shoe engaging member.

8. The system as recited in Claim 1, wherein said shoe engaging member (80) is shaped to define a substantially concave upwardly facing arc.

9. The combination as recited in Claim 1, wherein said pedal engaging member (16, 17) is shaped to define a convex arc.

10. The combination as recited in Claim 1, wherein said shoe engaging member (80) is formed to define an upwardly facing concave curve in the lateral direction on said pedal and said shoe engaging member (16, 17) is shaped to define a downwardly facing concave curve laterally to mate with said shoe engaging member on said pedal, such that the normal bicycle pedaling action produces lateral force components tending to maintain said shoe centrally on said pedal.

11. The combination as recited in Claim 1, wherein said pedal engaging member includes a pair of laterally-spaced male connectors (16, 17) mounted on a support plate and said shoe engaging member includes a pair of laterally-spaced female connectors (100, 102), mounted on said pedal, said laterally-spaced male connectors and said laterally-spaced female connectors being cooperative to laterally mate therebetween.

12. The combination of a bicycle pedal (20, 60, 82), a shoe (10), and connector means (16, 17, 28, 30, 72, 74, 62, 64, 100, 102) formed on the pedal and shoe for releasably connecting the shoe to the pedal in a manner to enable rotational force to be applied through the shoe to the pedal through 360° of rotation, said connector means including interengaging connectors arranged such that the shoe may be connected to and disconnected from the pedal simply by moving the shoe relative to the pedal, but said connector means being arranged at an angle such that normal bike pedaling action will produce an edgewise force component, causing the shoe to be maintained in driving relation with the pedal.

13. The combination of Claim 12 wherein the connectors include means that are connected and disconnected by substantially edgewise movement of the shoe realtive to the pedal.

14. The combination of Claim 12 wherein the connector means on the pedal are arranged to define an upwardly facing concave curve in the lateral direction on the pedal and the connector means on the shoe are arranged to define a downwardly facing concave curve laterally to mate with the concave connector means on the pedal so that the normal bike pedaling action produces lateral components tending to maintain the shoe centrally on the pedal.

15. The combination of Claims 12 or 14 wherein said connectors include a pair of laterally-spaced male connectors mounted on either the shoe or the pedal and a pair of laterally-spaced female connectors mounted on either the shoe or the pedal to laterally mate with the male connectors.

16. The combination of Claims 12 or 14 wherein said connectors include a plate (14) imbedded in the sole (12) of said shoe (10) with a connector (16, 17, 72, 74) mounted on said plate, and said connector means further includes a connector mounted on said pedal (28, 30, 62, 64, 100, 102) to mate with the connector on the shoe.

17. The combination of Claim 12 wherein said pedal includes a sleeve (22) rotatably mounted on a shaft (24), and said connectors include a pair of laterally-spaced connectors (28, 30, 62, 64) mounted on said sleeve, and further including a counter weight (56) attached to said sleeve and extending radially outwardly from the sleeve on a side opposite to that of the connectors on said sleeve so that when the shoe is not connected to the pedal, the sleeve will rotate, urged by said counterweight, to the position where the counterweight extends downwardly and the connectors on the sleeve extend upwardly for ready connection to the shoe.

18. The combination of Claims 12 or 14 wherein said connector means include a connector on said shoe and a connector on said pedal with one of said connectors being laterally received in the other and one of said connectors including guide means for guiding the connectors into interengaging position.

19. The combination of Claims 12 or 14 wherein said connectors include a pair of lugs (16, 17) laterally spaced and secured to the sole (12) of said shoe and said pedal includes a pair of laterally-spaced female connectors (28, 30) for receiving said lugs.

20. The combination of Claims 12 or 14 wherein said connectors includes a pair of lugs (62, 64) laterally spaced and secured to said pedal, and a pair of laterally-spaced female connectors (72, 74) mounted on the sole (12) of the shoe for receiving the lugs.

21. The combination of a bicycle pedal including a sleeve (22) rotatably mounted on a shaft (24), a pair of connectors (28, 30, 62, 64) laterally spaced and mounted on said sleeve, said connectors being oriented to define a substantially concave upwardly facing arc with the midpoint of the arc being between said connectors, a shoe (10) having a reinforcing support plate (14) imedded in the sole (12) of the shoe, a pair of laterally-spaced connectors (16, 17, 72, 74) secured to and extending downwardly from said plate, the connectors on the shoe being sized to move laterally into engagement with the connectors on the pedal in a manner to enable a rotational force to be applied through said shoe to said pedal through 360° of pedaling rotation, the connectors on said shoe being oriented to define a convex arc such that normal pedaling action on the pedal produces lateral forces urging said shoe to remain centered on the pedal with the connectors interengaged.

22. A method of making a releasable interengaging connection between a bicycle pedal and a shoe to be worn by the person pedaling the bicycle comprising mounting connector means (16, 17, 28, 30, 100, 102) on the pedal (20, 60, 82) and on the sole (12) of the shoe (10) that can be releasably connected and disconnected by substantially edgewise movement of the shoe relative to the pedal, but said mounting being at an angle such that the normal bike pedaling action will produce a lateral force component causing the shoe to be maintained in normal driving relation with the pedal.

23. The method of Claim 21 wherein the connector means (16, 17, 72, 74) are mounted on the shoe to define a downwardly facing convex curve, and the connectors (28, 30, 62, 64, 100, 102) on the pedal are mounted to form an upwardly facing, concave curve which mates with the shoe curve such that normal pedaling action creates lateral forces tending to center laterally the shoe on said pedal.

24. A bicycle pedal having a rotational axis (87) and an upwardly facing surface (80) to be engaged by a cyclist's shoe, said pedal having connector means (100, 102) formed in its upper surface to mate releasably with connector means (16, 17) on the cyclist's shoe so that rotational force may be applied through the shoe for 360° of rotation, the pedal upper surface (80) being located substantially below the pedal rotational axis (87) when the pedal is normally disposed with said surface facing upwardly.

Fig.1

Fig.2

Fig.3

Fig.6

Fig.4

Fig.5

**Fig. 7**

70

72

74

12

**Fig. 8**

62a 62 60 64 64a

66

22

12 70 62a

72 66

22

**Fig. 9**

Fig. 10

Fig. 11

Fig. 12